# EUROPÄISCHE PATENTANMELDUNG

(11) **EP 3 683 636 A1**
(43) Veröffentlichungstag der Anmeldung: **22.07.2020**
(21) Anmeldenummer: 19152614.4
(22) Anmeldetag: 18.01.2019
(51) Int. Cl.: G05B 19/4063, G05B 23/02, G06F 11/07

(54) **KONTEXTSENSITIVES AUDIT TRAIL EINES TECHNISCHEN SYSTEMS**

(71) Anmelder: Siemens Aktiengesellschaft, 80333 München (DE)
(72) Erfinder: Lutz, Benjamin, 76327 Pfinztal (DE); Palmin, Anna, 76187 Karlsruhe (DE)

(57) **Zusammenfassung**

Vorgeschlagen wird ein Verfahren zur Steuerung eines technischen Systems mittels eines Leitsystems (1), bei dem das Leitsystem (1) nach dem Bearbeiten einer Anfrage eines Operators eine Antwortmeldung auf die Anfrage erzeugt. Das Verfahren ist dadurch gekennzeichnet, dass bei Auftreten eines fehlerhaften Zustands des technischen Systems in der Zeit zwischen der Anfrage und der Erzeugung der Antwortmeldung dazugehörige Fehlermeldungen automatisiert mit der Anfrage und der Antwortmeldung verknüpft werden und dem Operator eine entsprechende Information hierüber dargeboten wird.

## Beschreibung

Die Erfindung betrifft ein Verfahren zur Steuerung eines technischen Systems mittels eines Leitsystems, bei dem das Leitsystem nach dem Bearbeiten einer Anfrage eines Operators eine Antwortmeldung auf die Anfrage erzeugt, mit den Merkmalen des Anspruchs 1. Außerdem betrifft die Erfindung ein Leitsystem für ein technisches System gemäß Anspruch 6. Zudem betrifft die Erfindung eine Verwendung eines Leitsystems zum Betrieb eines technischen Systems gemäß Anspruch 7.

Für ein Audit-Trail einer Prozessanlage werden prozessbeeinflussende Handlungen der Operatoren erfasst und archiviert, beispielsweise bei:
- der Änderung eines Stellwertes in einem Faceplate,
- der Quittierung eines Alarms in einer Meldefolgeanzeige,
- der Unterdrückung eines Alarms in der Meldefolgeanzeige.

Mit anderen Worten wird im Rahmen des Audit-Trails die Absicht des jeweiligen Operators hinter einer bestimmten, von diesem ausgeführten Handlung erfasst. Dabei werden die Auswirkungen der (durch eine bestimmte Absicht motivierten) Handlungen des Operators auf das verfahrenstechnische System für ein Audit-Trail in der Regel nicht miterfasst. Kommt es bei einer Operatorhandlung (z.B. beim Setzen eines Stellwertes) zu Systemfehlern, wie beispielsweise
- dem Absturz einer Softwarekomponente,
- dem Ausfall einer überwachten Hardware,
- einer Beeinträchtigung der Kommunikation durch Überlasten, lassen sich diese Folgeereignisse nur schwer mit der Operatorhandlung, durch die sie ausgelöst worden waren, in Zusammenhang bringen bzw. korrelieren.

In der Regel werden derartige Zusammenhänge durch einen Experten, basierend auf dessen Erfahrungswerten erkannt. Er führt dabei eine Art Korrelation durch, in dem er sich - basierend auf seinen früheren Erfahrungen - überlegt, wie die letzte Operatorhandlung mit dem aktuell vorliegenden Systemfehler zusammenhängen könnte. Dieser Vorgang ist jedoch nicht verbindlich und es gibt keine automatisierte Korrelation zur Unterstützung dieses Vorgangs. Somit können die zu den Systemfehlern führenden Operatorhandlungen nicht unmittelbar als Auslöser der Systemfehler erkannt und entsprechend korrigiert werden (um derartigen Systemfehlern zukünftig vorzubeugen).

Zwar können eine Operatorhandlung und mutmaßlich dazugehörige Systemfehlermeldungen zeitlich nah beieinander liegen, so dass ein gewisser Zusammenhang naheliegend zu sein scheint. Da sich jedoch in der Regel, gerade bei größeren technischen Anlagen, parallel mehrere Operatorhandlungen ereignen, ist eine konkrete, sinnvolle Korrelation nur sehr schwierig festzustellen. Dies liegt unter anderem auch daran, dass verschiedene Typen von Systemfehlermeldungen aktuell nicht in einem gemeinsamen Werkzeug bzw. System, sondern in verschiedenen Werkzeugen/ Systemen weiterverarbeitet und/oder gespeichert werden.

Der Erfindung liegt die Aufgabe zugrunde, ein Audit-Trail eines Leitsystems eines technischen Systems hinsichtlich Informationsgehalt und Nutzen zu verbessern.

Diese Aufgabe wird gelöst durch ein Verfahren zur Steuerung eines technischen Systems mittels eines Leitsystems mit den Merkmalen des Anspruchs 1. Außerdem wird die Aufgabe gelöst durch ein Leitsystem für ein technisches System gemäß Anspruch 6 und eine Verwendung eines Leitsystems zum Betrieb eines technischen Systems gemäß Anspruch 7. Vorteilhafte Weiterbildungen ergeben sich aus den abhängigen Ansprüchen.

Bei einem Verfahren zur Steuerung eines technischen Systems der eingangs beschriebenen Art wird die Aufgabe erfindungsgemäß dadurch gelöst, dass bei Auftreten eines fehlerhaften Zustands des technischen Systems in der Zeit zwischen der Anfrage und der Erzeugung der Antwortmeldung dazugehörige Fehlermeldungen automatisiert mit der Anfrage und der Antwortmeldung verknüpft werden und dem Operator eine entsprechende Information hierüber dargeboten wird.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Unter einem technischen System wird vorliegend eine Mehrzahl an Maschinen, Geräten, Applikationen oder dergleichen verstanden, die in einem funktionalen und oftmals auch räumlichen Zusammenhang zueinanderstehen. Mittels des technischen Systems können beispielsweise in (groß-)technischen Dimensionen Produkte, Komponenten und dergleichen erzeugt bzw. gefertigt werden. Bei dem technischen System kann es sich beispielsweise aber auch um ein Automobil, ein Schiff, ein Flugzeug oder dergleichen handeln.

Unter einem Operator wird ein menschlicher Bediener des technischen Systems verstanden. Der Operator interagiert mittels spezieller Benutzerschnittstellen mit dem technischen System bzw. dessen Leitsystem und steuert spezielle technische Funktionen des Systems. Hierzu kann der Operator ein Bedien- und Beobachtungssystem des Leitsystems nutzen.

Eine Anfrage des Operators kann beispielsweise das Setzen eines Stellwerts eines Reglers des technischen Systems sein. Der Operator stellt die Anfrage an das Leitsystem, welches die Anfrage im Rahmen der Bearbeitung zunächst ausliest und deren Inhalt im Rahmen zuvor festgelegter Regeln interpretiert. Je nach Inhalt der Anfrage werden verschiedene Geräte / Komponenten des technischen Systems von dem Leitsystem adressiert. Im Falle des Setzens eines Stellwerts eines Reglers kann die Anfrage unter anderem Informationen über einen Vorher-Wert und einen Nachher-Wert und eine Kennung des zu adressierenden Objekts des technischen Systems beinhalten.

Unter einer Meldung wird allgemein ein Bericht vom Eintreten eines Ereignisses verstanden, das einen Übergang aus einem diskreten Zustand innerhalb des technischen Systems in einen anderen diskreten Zustand darstellt. Dadurch wird ermöglicht, dass der oder die Operatoren möglichst frühzeitig genau über die Folge bzw. das Ergebnis ihrer Handlungen (die Folge ihrer Anfragen) im jeweiligen Systemkontext informiert werden. Hierzu bietet das Leitsystem dem Operator die verknüpften Informationen dar, beispielsweise mittels eines hierfür geeigneten Clients eines Servers des Leitsystems.

Bei Auftreten eines fehlerhaften Zustands des technischen Systems wird erfindungsgemäß automatisiert eine Verknüpfung zwischen dem wenigstens einen Fehlerereignis und der Anfrage bzw. der dazugehörigen Antwortmeldung mittels des Leitsystems hergestellt. Mit anderen Worten wird das Fehlerereignis in Korrelation mit Anfrage bzw. Antwortmeldung gebracht.

Durch die kontextsensitive, verbindliche und genau auf die jeweiligen Konfigurationsdaten und den Systemzustand zugeschnittene Gestaltung des Audit Trails, die durch die vorliegende Erfindung ermöglicht wird, gewinnt das Audit Trail bedeutend an Informationsgehalt und Nutzen im Hinblick auf diverse Auswertungen zu Laufzeit und im Nachhinein. Die Auswertungen liefern dadurch viel exaktere Ergebnisse und können nicht nur zu Auditzwecken, sondern auch für die Optimierung der Systemabläufe des technischen Systems nutzbringend eingesetzt werden.

Dadurch, dass der Operator möglichst frühzeitig und sehr genau über die Folge bzw. das Ergebnis seiner Handlungen im jeweiligen Systemkontext informiert wird, kann ein fundierter Beitrag dazu geleistet werden, die Arbeit des Operators effizienter und weniger fehleranfällig zu gestalten. Zudem kann eine Einarbeitung von neuen Operatoren unter Zuhilfenahme des erfindungsgemäßen Verfahrens einfacher vonstattengehen.
Die Fehlermeldungen können Systemmeldungen, Diagnosemeldungen, Traces, Logs und/oder Security-Events sein.

Unter dem Begriff Systemmeldungen werden dabei vorkonfigurierte Meldungen verstanden, die beispielsweise generiert werden, wenn eine Verbindung verloren geht ("Connection lost after Timeout: Operator Station - Automation Station"). Diese Meldungen sind als Zusatzinformation für die Wartung und Diagnose gedacht und von mittlerer Detailtiefe.

"Traces" sind detaillierte und vielfältige Informationen, die direkt aus Softwarekomponenten des technischen Systems stammen und eine hohe Detailtiefe aufweisen. Diese Informationen gehen über die "Wartung und Diagnose"-Informationen der Systemmeldungen hinaus und sind in der Regel für einen technischen Support des technischen Systems bestimmt.

"Logs" oder "Security-Events" sind vordefinierte und in Systemkomponenten des technischen Systems implementierte security-relevante Events, die von den Systemkomponenten generiert werden, sobald bestimmte, vordefinierte security-relevante Ereignisse eintreten.

Bevorzugt wird die Verknüpfung aus Anfrage, Antwortmeldung und Fehlermeldungen mit einer digitalen Signatur des Operators versehen, der die Anfrage an das Leitsystem gestellt hat. Dadurch wird eine möglichst hohe Verbindlichkeit und Nicht-Abstreitbarkeit (Englisch: "Non-repudiation") der vom Operator gestellten Anfrage und der damit verknüpften Fehlermeldungen des technischen Systems erzielt. Durch die Signierung wird der Schutz der Integrität und der Authentizität der Audit-Trail-Einträge gewährleistet. Mittels der Verknüpfung lässt sich im Nachhinein leicht nachvollziehen, dass während der Ausführung der dem jeweiligen Operator eindeutig zuordenbaren Operatorhandlungen Fehler aufgetreten sind, über die der Operator informiert wurde.

Im Rahmen einer vorteilhaften Weiterbildung der Erfindung verlangt das Leitsystem von dem Operator nach der Verknüpfung der Anfrage und der dazugehörigen Antwortmeldung mit den Fehlermeldungen eine Quittierung der zu seiner Anfrage gehörigen Antwortmeldung. Dadurch kann sichergestellt werden, dass der Operator auch von der für ihn bestimmten Verknüpfung Kenntnis haben kann. Durch die Quittierung und digitale Signierung wird das Audit-Trail verbindlich und im Hinblick auf Security manipulationssicher gestaltet. Es zeigt nachweislich, dass der jeweilige Operator bestimmte Handlungen nicht nur ausgelöst hat, sondern auch über deren Folgen (ggf. mehrmals) informiert wurde.

Bevorzugt werden im Rahmen der Verknüpfung der Fehlermeldungen mit der Anfrage und der Antwortmeldung nach Eingehen der Anfrage in dem Leitsystem folgende Schritte von dem Leitsystem ausgeführt:
a) Ermittlung von Komponenten des technischen Systems, die von der Anfrage des Operators betroffen sind;
b) Ermittlung von die zuvor identifizierten Komponenten betreffenden Fehlermeldungen, die während einer Bearbeitung der Anfrage des Operators auftreten;
c) Nach Bearbeitung der Anfrage des Operators Erzeugung der Antwortmeldung;
d) Verknüpfung von Anfrage, Antwortmeldung und Fehlermeldungen.

Zunächst werden nach Eingang der Anfrage in dem Leitsystem von diesem die durch die jeweilige Operatoranfrage betroffenen Komponenten des technischen Systems ermittelt. Im Falle einer Prozessanlage ist in erster Linie ein Operator Station Server betroffen, an dem der Operator mittels eines zu dem Server gehörigen Operator Station Clients angemeldet ist (aktueller Zustand). Beispielsweise im Falle einer Stellwertänderung eines Reglers wird dabei geprüft, in welchem Operator Station Server sich seine Prozessdaten im Prozessabbild befinden. Darüber hinaus wird geprüft, welche weiteren abhängigen Geräte (wie eine Automatisierungsstation) von der Anfrage betroffen sind. Als Gesamtergebnis kann somit ermittelt werden, welche Geräte zur Ausführung der Operatoranfrage involviert sind, und somit auch, von welchen Geräten Informationen bezogen werden können, um das Systemverhalten des technischen Systems während der Bearbeitung der Anfrage erfassen zu können. Es wird dabei eine Art Gerätefilter definiert, der eine Aussage darüber erlaubt, von welchen Geräten Systemmeldungen, Traces, Diagnosemeldungen, Security-Events und dergleichen bezogen werden können, die ggf. in Zusammenhang mit der Operatoranfrage stehen.

Anhand des zuvor ermittelten Gerätefilters werden nun während der Bearbeitung der Operatoranfrage in einem zweiten Schritt sämtliche neu aufgetretene Systemmeldungen, Traces, Diagnosemeldungen, Security-Events usw. empfangen (und zwischengespeichert).

Nach dem Abschluss der Bearbeitung der Operatoranfrage wird eine Antwortmeldung erzeugt, die mit der Anfrage und der Fehlermeldung bzw. den Fehlermeldungen verknüpft bzw. korreliert wird.

Die Aufgabe wird zudem gelöst durch ein Leitsystem für eine technische Anlage, insbesondere eine Fertigungs- oder Prozessanlage, das dazu ausgebildet und vorgesehen ist, ein Verfahren wie zuvor erläutert durchzuführen.

Zudem wird die Aufgabe gelöst durch die Verwendung eines solchen Leitsystems zum Betrieb eines technischen Systems.

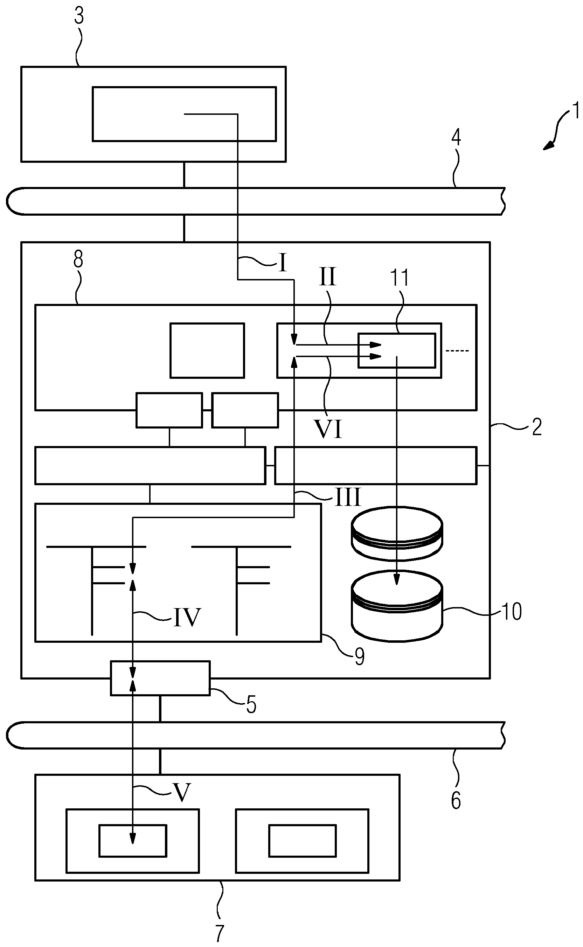

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein Teil eines erfindungsgemäßen Leitsystems 1 eines als verfahrenstechnischen Anlage ausgebildeten technischen Systems dargestellt. Das Leitsystem 1 umfasst einen Server eines Bediensystems bzw. einen Operator Station Server 2 und einen dazugehörigen Operator Station Client 3. Der Operator Station Server 2 und der Operator Station Client 3 sind über einen Terminalbus 4 miteinander und mit nicht dargestellten weiteren Komponenten des Leitsystems 1 wie einem Engineering System Server oder einem Prozessdatenarchiv verbunden.

Ein Benutzer bzw. Operator hat mittels des Operator Station Servers 3 mittels des Terminalbus 4 im Kontext eines Bedienens und Beobachtens Zugriff auf den Operator Station Server 2. Der Terminalbus 4 kann, ohne sich darauf zu beschränken, beispielsweise als Industrial Ethernet ausgebildet sein.

Der Operator Station Server 2 weist eine Geräteschnittstelle 5 auf, die mit einem Anlagenbus 6 verbunden ist. Hierüber kann der Operator Station Server 2 mit einem (externen) Gerät 7 (hier eine Automatisierungsstation) kommunizieren. Bei dem angeschlossenen Gerät 7 kann es sich dabei alternativ auch um eine Applikation, insbesondere Webapplikation, handeln. Im Rahmen der Erfindung kann eine beliebige Zahl an Geräten und/oder Applikationen an den Operator Station Server 2 angeschlossen sein. Der Anlagenbus 6 kann, ohne sich darauf zu beschränken, beispielsweise als Industrial Ethernet ausgebildet sein. Das Gerät 7 kann wiederum mit einer beliebigen Anzahl an Subsystemen (nicht dargestellt) verbunden sein.

In dem Operator Station Server 2 ist ein Visualisierungsdienst 8 integriert, über den eine Übertragung von (Visualisierungs-)Daten an den Operator Station Client 3 erfolgen kann. Zudem weist der Operator Station Server 4 ein Prozessabbild (Process Image) 9 und ein lokales Archiv 10 auf.

Innerhalb des Visualisierungsdienstes 8 ist ein Audit Trail Service 11 implementiert, dessen Wirkungsweise und Funktion im Folgenden erläutert werden.

Ein Operator ändert in dem Operator Station Client 3 einen Stellwert eines Reglers eines Prozessobjekts der verfahrenstechnischen Anlage (Prozessanlage). Diese Information bzw. Anfrage wird von dem Operator Station Client 3 an den Operator Station Server 2 übermittelt (Schritt I) und dort (unter anderem) von dem Audit Trail Service 11 ausgelesen (Schritt II) .

Der Audit Trail Service 11 erstellt daraufhin eine Bedienmeldung und ermittelt die von der Anfrage des Operators betroffenen Geräte 7 bzw. Prozessobjekte. Zudem empfängt er von den betroffenen Geräten 7 bzw. Prozessobjekten und/oder dem lokalen Archiv 10 bis zum Abschluss der Bearbeitung der Anfrage des Operators alle Fehlermeldungen, die einen fehlerhaften Zustand der verfahrenstechnischen Anlage beschreiben.

Die Bearbeitung der Anfrage des Operators erfolgt in einem Schritt III zunächst darin, dass die Stellwertänderung in das Prozessabbild 9 geschrieben wird. Die Geräteschnittstelle 5 bzw. der Gerätetreiber gibt die angeforderten Stellwertänderungen an die Automatisierungsstation 7 weiter (Schritt IV, V). Dort wird die Stellwertänderung vorgenommen und eine entsprechende Rückmeldung an die Geräteschnittstelle 5 und das Prozessabbild gegeben.

Der Audit Trail Service 11 wird von der Automatisierungsstation 7 mittels deren Rückmeldung darüber informiert, ob die Stellwertänderung erfolgreich vorgenommen werden konnte. Unabhängig vom Erfolg der Stellwertänderung erzeugt der Audit Trail Service 11 eine vom Operator zu quittierende Antwortmeldung, wenn der Audit Trail Service 11 in der Zeit zwischen dem Eingehen der Anfrage und dem Abschluss der Bearbeitung der Anfrage Fehlermeldungen von den von der Anfrage betroffenen Geräten 7 bzw. Prozessobjekten empfangen hat. Die Antwortmeldung, die Anfrage und die dazugehörigen Fehlermeldungen werden von dem Audit Trail Service 11 automatisiert verknüpft und sowohl in dem lokalen Archiv 10 für eine spätere Überprüfung hinterlegt als auch dem Operator zur Quittierung dargeboten.

Die vom Operator gegebenenfalls erfolgte Quittierung der Antwortmeldung wird dann anschließend ebenfalls im Archiv 10 hinterlegt. Das Archiv 10 muss nicht zwingend lokal auf dem Operator Station Server 2 implementiert sein, sondern kann auch von diesem getrennt realisiert sein, beispielsweise in einer cloudbasierten Umgebung. Unter einer Cloud wird dabei ein Rechnernetzwerk mit onlinebasierten Speicher- und Serverdiensten verstanden, welches üblicherweise als Cloud (engl. Wolke) oder Cloud-Plattform bezeichnet wird. Die in der Cloud gespeicherten Daten sind online zugänglich, sodass auch die verfahrenstechnische Anlage über das Internet Zugriff auf ein zentrales Datenarchiv in der Cloud hat.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Steuerung eines technischen Systems mittels eines Leitsystems (1), bei dem das Leitsystem (1) nach dem Bearbeiten einer Anfrage eines Operators eine Antwortmeldung auf die Anfrage erzeugt,
**dadurch gekennzeichnet, dass**
bei Auftreten eines fehlerhaften Zustands des technischen Systems in der Zeit zwischen der Anfrage und der Erzeugung der Antwortmeldung dazugehörige Fehlermeldungen automatisiert mit der Anfrage und der Antwortmeldung verknüpft werden und dem Operator eine entsprechende Information hierüber dargeboten wird.

2. Verfahren nach Anspruch 1, bei dem die Fehlermeldungen Systemmeldungen, Diagnosemeldungen, Traces, Logs und/oder Security-Events sind.

3. Verfahren nach Anspruch 1 oder 2, bei dem die Verknüpfung aus Anfrage, Antwortmeldung und Fehlermeldungen mit einer digitalen Signatur des Operators versehen wird, der die Anfrage an das Leitsystem (1) gestellt hat.

4. Verfahren nach Anspruch 3, bei dem das Leitsystem (1) von dem Operator nach der Verknüpfung der Anfrage und der dazugehörigen Antwortmeldung mit den Fehlermeldungen eine Quittierung der zu seiner Anfrage gehörigen Antwortmeldung verlangt.

5. Verfahren nach einem der vorangegangenen Ansprüche, bei dem im Rahmen der Verknüpfung der Fehlermeldungen mit der Anfrage und der Antwortmeldung nach Eingehen der Anfrage in dem Leitsystem (1) folgende Schritte von dem Leitsystem (1) ausgeführt werden:
a) Ermittlung von Komponenten (7) des technischen Systems, die von der Anfrage des Operators betroffen sind;
b) Ermittlung von die zuvor identifizierten Komponenten (79 betreffenden Fehlermeldungen, die während einer Bearbeitung der Anfrage des Operators auftreten;
c) Nach Bearbeitung der Anfrage des Operators Erzeugung der Antwortmeldung;
d) Verknüpfung von Anfrage, Antwortmeldung und Fehlermeldungen.

6. Leitsystem (1) für ein technisches System, insbesondere eine Fertigungs- oder Prozessanlage, das dazu ausgebildet und vorgesehen ist, ein Verfahren gemäß einem der vorangegangenen Ansprüche durchzuführen.

7. Verwendung eines Leitsystems (1) gemäß Anspruch 6 zum Betrieb eines technischen Systems, insbesondere einer Fertigungs- oder Prozessanlage.
